# DEMANDE DE BREVET EUROPEEN

(11) **EP 0 931 973 A1**
(43) Date de publication de la demande: **28.07.1999**
(21) Numéro de dépôt: 99400110.5
(22) Date de dépôt: 19.01.1999
(51) Int. Cl.: F16M 11/24

(54) **Socle réglable pour une installation reposant sur une surface d'appui, notamment pour un coffre à billets d'un automate bancaire**

(30) Priorité: 22.01.1998 FR 9800669
(71) Demandeur: BULL CP8, 78430 Louveciennes (FR)
(72) Inventeur: Remise, René, 91940 Les Ulys (FR)
(74) Mandataire: Corlu, Bernard

(57) **Abrégé**

L'invention concerne un socle réglable en hauteur (2) pour une installation fixée au sol, notamment pour un automate bancaire comprenant un coffre à billets (12). Le socle (2) comprend des première (2a) et seconde (2b) pièces munies d'une paire de parois latérales opposées (21a, 21b), de manière à former un "U". Ces parois latérales (21a, 21b) comportent deux paires de rampes de perçage inclinées (4g-4d, 5g-5d), constituées de deux rangées de trous (40g, 41g, 40d, 41d, 50g, 51g, 50d, 51d). Les pièces (2a, 2b) sont emboîtées, tête-bêche, l'une sur l'autre. On sélectionne et on met en correspondance quatre paires de trous (40g, 41g, 40d, 41d, 50g, 51g, 50d, 51d) des parois (21a, 21b), de manière à obtenir le réglage entre une hauteur maximale et une hauteur minimale. Dans des modes de réalisation supplémentaires, le socle est constitué de deux tronçons de cylindre emboîtés, de section circulaire ou polygonale. Selon une autre variante, on interpose des entretoises, ce qui permet d'augmenter l'amplitude du réglage en hauteur.

## Description

La présente invention concerne un socle réglable en hauteur pour une installation reposant sur une surface d'appui, par exemple une installation fixée au sol.

L'invention s'applique de façon préférentielle, bien que non exclusive, aux coffres à billets des automates bancaires. Cependant, pour fixer les idées, on se placera ci-après dans le cadre de cette application préférentielle, sauf avis contraire.

En outre, l'invention concerne plus particulièrement les installations qui, bien que fixées aux sols, ne nécessitent pas l'adoption de mesures particulières assurant une fonction de sécurité anti-arrachement du coffre. En ce qui concerne l'application préférée, on considérera surtout des coffres dits "légers".

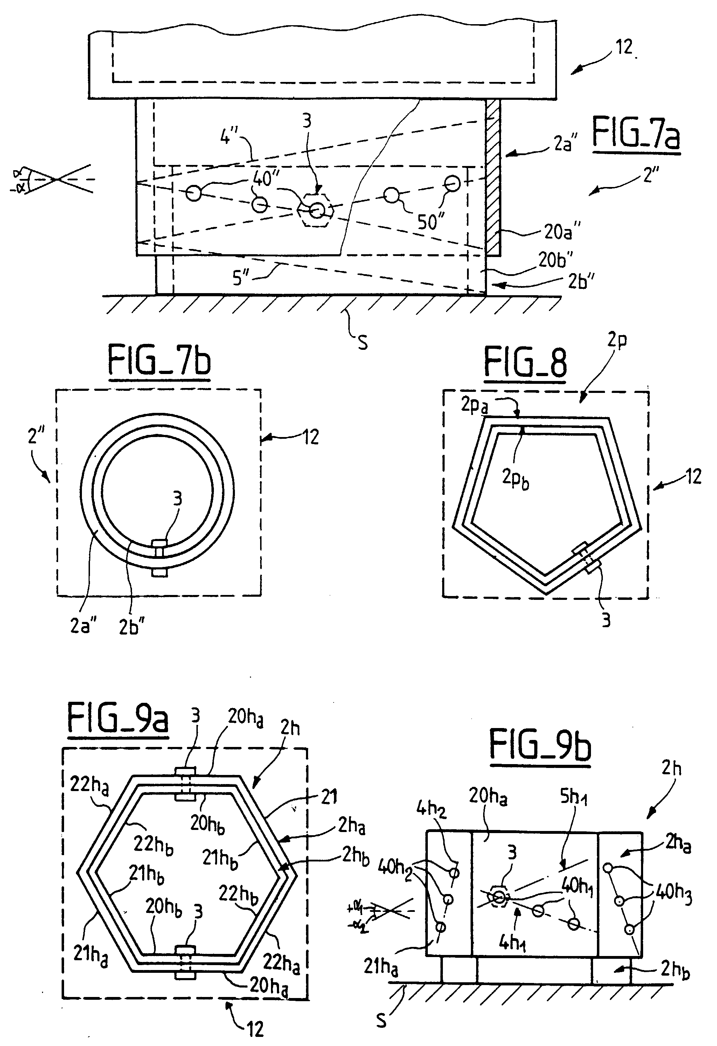

Dans le cadre de l'invention, le terme "automates bancaires" doit être compris dans son sens le plus général. Il se rapporte notamment aux "Distributeurs Automatiques de Billets" figure 9a ou "DAB" et aux "Guichets Automatiques de Banque" ou "GAB".

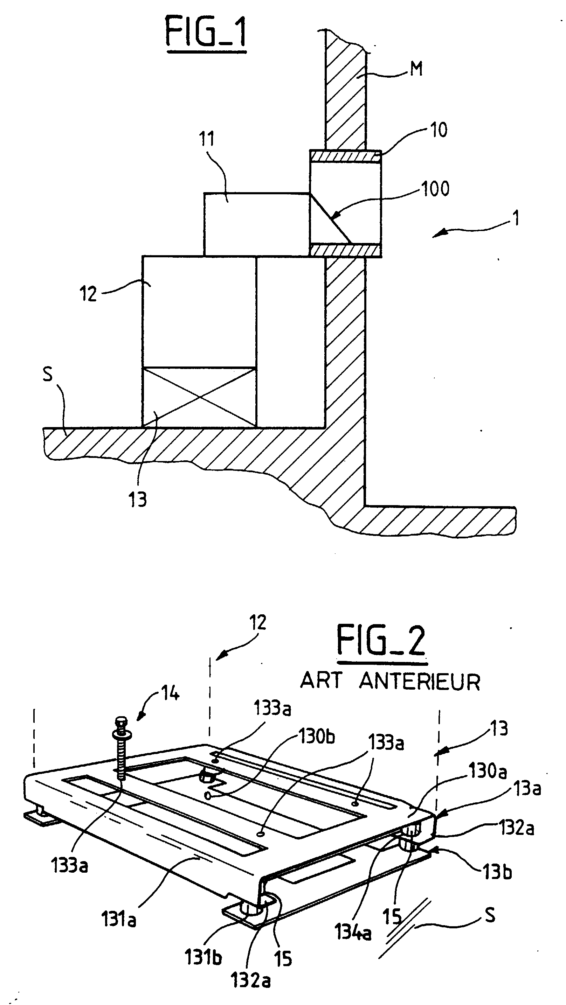

La figure 1 annexée à la présente description illustre schématiquement la configuration générale d'un automate bancaire 1.

Un automate bancaire comprend généralement quatre parties principales : une fenêtre d'accès 10 logeant une interface client 100, une armoire électronique 11, un coffre à billets 12 et un socle 13 reposant sur le sol *S*.

La fenêtre d'accès 10 est le plus souvent disposée dans le mur *M* d'un bâtiment, par exemple d'une agence bancaire. Elle est généralement constituée par un "collier" inséré dans un orifice pratiqué dans le mur *M*, c'est-à-dire un cadre d'habillage donnant accès à l'automate proprement dit.

L'interface client 100 comprend divers circuits électroniques, un lecteur de carte, un clavier de commande permettant d'effectuer les transactions autorisées par un automate donné et de saisir le code confidentiel afférent à la carte, un organe de visualisation pour établir un dialogue entre l'automate et un utilisateur et le guider.

L'armoire électronique 11 comprend des circuits complémentaires, ainsi que des organes électromécaniques pour distribuer la quantité de billets demandée. Il est également prévu des organes d'interface électromécanique entre le coffre à billets 12 et l'armoire électronique 11. Ce sont ces organes qui vont extraire les billets demandés, dans un ou plusieurs casiers du coffre 12, selon la somme demandée (billets de 100 F, 200 F, etc.).

Le coffre à billets 12 repose sur le sol *S* via un socle 13 auquel il est assigné deux fonctions principales : une fonction de mise à hauteur appropriée du coffre 12 et une fonction d'arrimage au sol *S*.

Pour certaines applications, les coffres ont un poids très élevé, poids dû notamment à un fort blindage, et sont conçus pour résister à l'effraction. Aussi la fonction arrimage précitée se double d'une fonction de sécurité anti-arrachement. La sécurité obtenue peut être qualifiée de passive.

Pour d'autres applications, les coffres sont légers et il n'est pas requis de résistance à l'arrachement élevée. La sécurité antivol est obtenue par des méthodes que l'on peut qualifier d'actives : marquage indélébile des billets présents dans le coffre lors d'une tentative d'effraction, etc.

Dans cette catégorie de coffres, on trouve les coffres dits "légers" répondant à certaines normes imposées aux établissements bancaires, comme les normes américaines "UL" (pour "Underwriter Laboratories").

Le socle 13 doit donc assurer une fixation au sol *S*, sans sécurité particulière anti-arrachement. Il doit aussi, sauf à utiliser un socle spécifique pour chaque installation, ce qui serait d'un prix de revient prohibitif, assurer la possibilité d'une mise à hauteur réglable.

En effet, si les éléments 10 à 12 peuvent être standardisés, la disposition de ceux-ci doit tenir compte de la configuration variable du lieu d'utilisation : forme du mur *M*, hauteur de la fenêtre d'accès, etc.

La figure 2 annexée à la présente description illustre un exemple de réalisation d'un socle 13 selon l'art connu, adapté pour supporter un coffre léger 12. Ce socle 13 répond aux normes "UL" précitées.

Le socle 13 comprend deux parties, 13a et 13b. La partie inférieure, 13b, en contact avec le sol *S*, se présente sous la forme d'une plaque parallélépipédique rectangle ajourée. La partie supérieure 13a est plus complexe. Elle comprend tout d'abord une partie supérieure plane 130a, également ajourée. Cette partie supérieure plane se prolonge sur deux côtés par un double repli : le premier repli (à 90 degrés vers le bas) forme des parois latérales verticales 131a et le second repli (à 90 degrés vers l'intérieur) forme deux languettes horizontales 132a. Aux quatre coins du socle 13, on réalise des trous, 131b et 134a, respectivement dans la plaque 13b et dans les languettes horizontales 132a. On intercale entre les deux parties, inférieure 13b et supérieure 13a, des systèmes vis-écrous 15, insérés dans les trous 131b et 134a précités. Ces systèmes vis-écrou 15 permettent de régler l'écartement entre les deux parties, 13a et 13b du socle 13, et donc la hauteur de celui-ci.

La fixation du socle 13 sur le sol S, d'une part et du coffre 12 (en traits pointillés) sur le socle 13, d'autre part, peut s'effectuer à l'aide de chevilles à expansion 14, dont une seule a été représentée sur la figure 2. Pour ce faire, les deux parties, inférieure 13b et supérieure 13a, du socle 13 comportent des trous, par exemple quatre, 130b et 133a respectivement, dans des zones proches de la périphérie pour assurer une bonne stabilité. De même, on prévoit des trous dans le fond du coffre 12 et dans le sol (non représentés), en correspondance géométrique avec les trous 130b et 133a précités.

Si ce socle réglable 13 selon l'art connu répond fonctionnellement à ce que l'on en attend, il présente cependant plusieurs inconvénients.

Les pièces nécessaires ont une structure relativement complexe et sont difficiles à réaliser car elles nécessitent de nombreuses opérations de soudure. De même, les systèmes de réglage vis-écrous 15 doivent être mécano-soudés.

Pour toutes ces raisons, le coût actuel d'un tel système est élevé, typiquement supérieur à 1200 FF.

L'invention vise à pallier les inconvénients de l'art connu, dont certains viennent d'être rappelés.

Elle se fixe pour but un socle pour une installation fixée au sol, du type coffre ou similaire, notamment pour un automate bancaire, réglable en hauteur de façon simple, ne nécessitant pas d'outillage spécifique, ni un personnel spécialisé, et dont le prix de revient est très bas.

Pour ce faire, dans un premier mode de réalisation, le socle selon l'invention est composé de deux pièces complémentaires, que l'on appellera inférieure et supérieure, disposées tête-bêche et s'emboîtant l'une dans l'autre. Chaque pièce comprend au moins deux ailes latérales verticales opposées, munies chacune de rampes de perçage inclinées (rangées de trous régulièrement répartis). Le réglage en hauteur s'effectue simplement en choisissant l'un des trous de chaque rampe de perçage et en assujettissant les deux pièces par des systèmes vis-écrous.

Dans une variante de réalisation supplémentaire, les deux pièces, inférieure et supérieure, sont assujetties l'une à l'autre par une entretoise intermédiaire comportant également des rampes de perçage. Cette disposition permet de réaliser un socle de plus grande hauteur, tout en continuant à utiliser des pièces de base standardisées.

Dans un second mode de réalisation, les deux pièces emboîtées sont constituées par des tronçons de cylindre, de section circulaire ou polygonale, notamment pentagonale ou hexagonale.

L'invention a donc pour objet socle réglable en hauteur pour une installation, notamment pour un automate bancaire comprenant un coffre à billets, ledit socle étant interposé entre cette installation et une surface d'appui, caractérisé en ce qu'il comprend au moins des première et seconde pièces de hauteurs déterminées, chacune comprenant au moins une paroi latérale à coopération mutuelle, en ce que chacune desdites parois latérales est pourvue d'au moins une rampe de perçage inclinée comportant au moins une rangée d'au moins un trou, et en ce que lesdites pièces coopèrent par emboîtement l'une dans l'autre de façon qu'au moins une paire de trous appartenant, respectivement, à ces première et seconde pièces soient en correspondance, et en ce qu'un moyen de butée empêchant un déplacement mutuel de ces pièces s'étend dans ladite paire de trous, de manière à obtenir ledit réglage entre une hauteur maximale et une hauteur minimale, fonction desdites paires de trous sélectionnées et de ladite hauteur déterminée des première et seconde pièces.

L'invention sera mieux comprise et d'autres caractéristiques et avantages apparaîtront à la lecture de la description qui suit en référence aux figures annexées, parmi lesquelles :
- la figure 1 illustre la configuration générale d'un automate bancaire ;
- la figure 2 illustre, en perspective, un exemple de réalisation d'un socle réglable en hauteur pour un tel automate, selon l'art connu ;
- les figures 3a à 3c illustrent un exemple de socle réglable, selon un premier mode de réalisation d'un socle réglable en hauteur selon l'invention, en coupe (selon la ligne III-III de la figure 3b), en vue de haut et de côté, respectivement ;
- les figures 4a et 4b sont des vues agrandies du socle conforme aux figures 3a à 3c (en écorché partiel pour la figure 4a), illustrant le mode de réglage en hauteur de celui-ci ;
- la figure 5 illustre une variante du mode de réalisation selon les figures 3a à 4b ;
- les figures 6a et 6b illustrent une variante supplémentaire du mode de réalisation selon les figures 3a à 5 ;
- les figures 7a et 7b illustrent un deuxième mode de réalisation d'un socle réglable en hauteur selon l'invention, en vue de côté avec un écorché partiel et en vue de dessus, respectivement ;
- la figure 8 illustre une première variante de ce deuxième mode de réalisation, en vue de dessus ;
- et les figures 9a et 9b illustrent une seconde variante de ce deuxième mode de réalisation, en vue de dessus et de côté, respectivement.
On va maintenant décrire un premier mode de réalisation d'un socle conforme à l'invention par référence aux figures 3a à 4b.

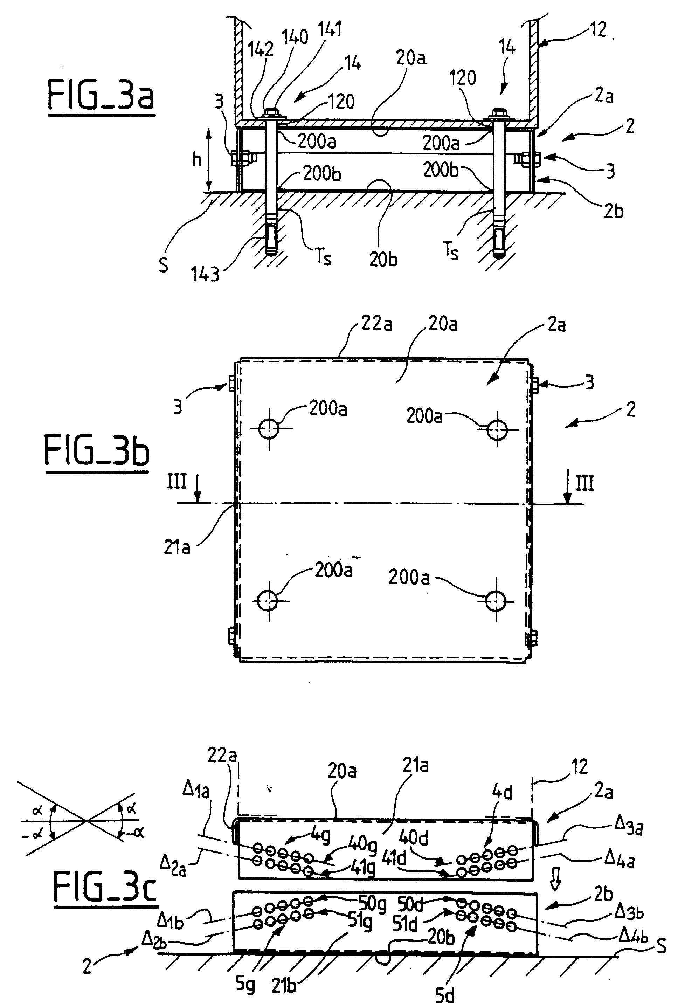

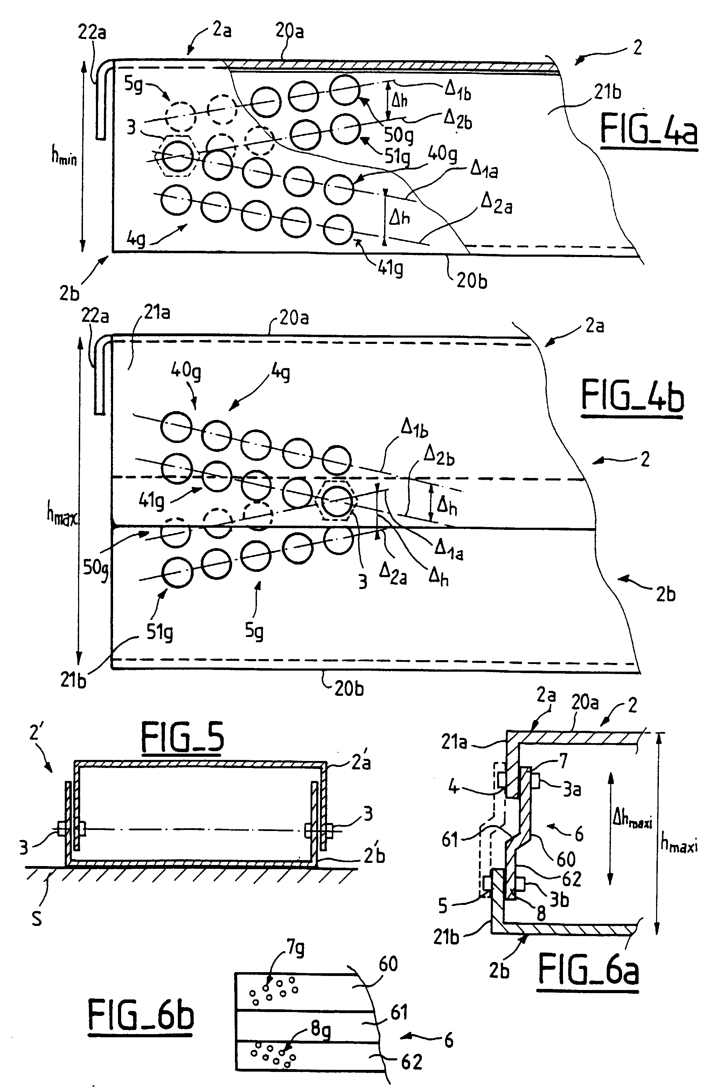

De façon plus précise, la figure 3a illustre, en coupe, le socle selon l'invention, désormais référencé 2. Le socle 2 est monté, assujetti au sol *S*, et le coffre 12 est fixé sur le socle 2. Les figures 3b et 3c illustrent ce même socle 2 en vue de dessus (assemblé) et de côté (en pièces détachées). Les figures 4a et 4b, sont des vues de côté partielles illustrant deux réglages en hauteur du socle 2 : valeur minimale *h*_{*min*} et valeur maximale *h*_{*max*}*·*

Comme il a été indiqué, le socle comprend deux pièces complémentaires : une pièce supérieure 2a et une pièce inférieure 2b, destinées à être emboîtées l'une dans l'autre, tête bêche. Chaque pièce, 2a et 2b, comporte un plateau horizontal ou paroi principale plane, 20a et 20b respectivement, et au moins une paire d'éléments repliés à 90 degrés, sur des côtés opposés, formant des parois latérales verticales, 21a et 21b respectivement. Chaque pièce, 20a ou 20b, a donc la configuration générale d'un "U". On peut également, au moins sur la pièce supérieure 2a, prévoir des replis supplémentaires sur les deux autres côtés, de manière à créer des parois verticales 22a, par exemple de plus faible hauteur. Cette disposition permet de rigidifier la structure qui va supporter le poids du coffre 12. Une telle disposition n'est pas nécessaire pour la pièce inférieure 2b, car la fixation au sol *S* la rigidifie de fait.

Sur chaque aile, 21a et 21b, on a réalisé une paire de rampes de perçage inclinées 4g-4d et 5g-5d (trous régulièrement répartis), de façon préférentielle de deux rangées de trous par rampe de perçage : 40g et 41g, 40d et 41d, 50g et 51g, et 50d et 51d, respectivement. Les indices arbitraires "g" et "d" sont utilisés pour différencier les côtés gauche et droit des figures 3c à 4b.

Dans l'exemple décrit sur ces figures, les paires d'ailes verticales, 21a et 21b, comportent, dans des zones d'extrémités gauche et droite, deux rangées parallèles de trous : 40g-41g et 40d-41d, pour l'aile 21a, et 50g-51g et 50d-51d, pour l'aile 21b, rangées de trous alignées sur les axes respectifs, Δ₁ₐ, Δ₂ₐ, Δ₃ₐ, Δ₄ₐ, Δ_{1b}, Δ_{2b}, Δ_{3b} et Δ_{4b}. Tous ces axes forment des angles de ± α degrés avec les plans des faces planes 20a et 20b, c'est-à-dire avec le sol *S* lorsque le socle 2 lui est arrimé et le coffre 12 installé sur celui-ci.

L'inclinaison des axes, c'est-à-dire la valeur de l'angle α, l'écartement Δ*h* entre deux rampes de perçage (comme le montrent plus particulièrement les figures 4a et 4b), le diamètre des trous, ainsi que les entre-axes entre trous (horizontaux et verticaux) sont choisis de manière telle qu'il y ait une continuité entre les deux rampes de perçage. En d'autres termes, le centre du trou le plus bas de la rampe de perçage supérieure (par exemple 40g), a le même pas vertical *dh* (figure 4b) par rapport au centre du trou le plus haut de la rampe de perçage inférieure (par exemple 41g), que le pas vertical entre les centres de deux trous successifs d'une même rangée.

L'assemblage des pièces 2a et 2b, et le réglage en hauteur du socle 2, s'effectuent simplement en mettant en correspondance, pour chaque série de trous (gauches ou droits), sur les deux ailes opposées 21a et 21b (de chaque côté des pièces 2a et 2b) une paire de trous particulière. Selon les trous choisis, on peut obtenir une hauteur de socle comprise entre une valeur maximale *h*_{*max*} et une valeur minimale *h*_{*min*}*.* Il suffit ensuite de fixer les deux pièces, 2a et 2b, à l'aide de systèmes vis-écrous 3, la partie vis étant insérée dans le trou sélectionné.

Il n'est d'ailleurs pas obligatoire que les deux pièces soient réellement assujetties l'une à l'autre, c'est-à-dire fixées rigidement. De façon plus générale, il est suffisant d'empêcher un déplacement mutuel des deux pièces. On peut donc utiliser, en lieu et place d'un système vis-écrou, tout moyen de butée ou d'accrochage classique : goupille, rivet, cliquet, cheville, etc.

On va maintenant illustrer les deux réglages extrêmes de hauteur de socle 2, *h*_{*min*} et *h*_{*max*}, par référence aux figures 4a et 4b, respectivement.

Les figures 4a et 4b sont des figures agrandies illustrant les deux pièces, 2a et 2b, assemblées. On a également réalisé un écorché sur la pièce 2b (sur la figure 4a), pour mieux illustrer le processus de montage et de réglage en hauteur du socle 2. Les pièces, 2a et 2b, sont positionnées tête bêche, de manière à ce que les faces planes, 20a et 20b constituent les parois supérieure et inférieure du socle 2, respectivement. Les paires de parois latérales, 21a et 21b, sont mises vis-à-vis. La paroi 20b repose sur le sol *S* et le coffre 12 est posé sur la paroi 20a (figure 3a).

Sur la figure 4a, on a choisi le trou le plus haut (et le plus à gauche) de la rangée de trous supérieure 40g de la paroi 21a et le trou le plus bas (et le plus à gauche) de la rangée de trous inférieure 51g de la paroi 21b. Il s'ensuit que les deux pièces, 2a et 2b, sont rapprochées au maximum l'une de l'autre et que la hauteur du socle 2 est minimale : *h*_{*min*}*.* Bien que non représenté, on effectue un choix identique (mais symétrique par rapport à un axe vertical médian) pour l'extrémité droite des parois 21a et 21b, de manière à obtenir une assise parfaitement horizontale. Comme indiqué précédemment, l'assemblage est effectué à l'aide d'un système vis-écrou 3.

Sur la figure 4b, on a choisi le trou le plus bas (et le plus à droite) de la rangée de trous inférieure 41g de la paroi 21a et le trou le plus haut (et le plus à droite) de la rangée de trous supérieure 50g de la paroi 21b. Il s'ensuit que les deux pièces, 2a et 2b, sont éloignées au maximum l'une de l'autre et que la hauteur du socle 2 est maximale : *h*_{*max*}. Bien que non représenté, on effectue aussi un choix identique (mais symétrique par rapport à un axe vertical médian) pour l'extrémité droite des parois 21a et 21b, de manière à obtenir une assise parfaitement horizontale. L'assemblage est également effectué à l'aide d'un système vis-écrou 3.

Si on se reporte de nouveau à la figure 3a, le coffre 12 est posé sur la face supérieure 20a du socle 2. Le socle peut être solidarisé au sol *S* de façon similaire à ce qui a été décrit pour le socle 13 de l'art connu (figure 2), à l'aide de chevilles 14 à expansion. En outre, le coffre lui-même peut être fixé, et au socle 2, et au sol *S* au travers du socle 2, par ces mêmes chevilles 14.

Généralement, les chevilles 14, utilisées dans le cadre de l'application préférée, sont du type connu commercialement sous la référence "M16" : leur diamètre de filetage est de 16 mm et elles sont prévues pour des trous dans le sol *S* de diamètre 24 mm. Elles sont réalisées en acier de très bonne qualité, de manière à présenter une résistance mécanique élevée.

Pour réaliser la fixation, on prévoit des trous 120 dans le fond du coffre 12, des trous, 200a et 200b, dans les deux parois horizontales, 20a et 20b, des pièces 2a et 2b, et des trous T_{*S*} dans le sol *S*. La tête des chevilles 14 comporte un pas de vis 141 sur lequel vient s'enfiler une rondelle 142 de retenue et se visse un organe de serrage (écrou) 140. Le bas de la cheville 14 est destiné à s'enfoncer dans les trous T_{*S*} réalisés dans le sol *S* et, lorsque l'on actionne les organes de serrage à l'intérieur du coffre à billets 12, la partie inférieure à expansion 143 se gonfle et bloque la cheville 14 dans le sol *S*: trous T_{*S*}. L'accès à l'intérieur du coffre à billets 12, pour poser les chevilles 14, s'effectue par une porte de chargement des billets (non représentée).

Dans une autre variante (non représentée), le coffre 12 est boulonné au socle 2, et le socle 2 est fixé de façon indépendante au sol S. Cette dernière fixation peut d'ailleurs être effectuée à l'aide de chevilles à expansion.

Dans ce qui précède, on a implicitement supposé que la pièce supérieure 2a avait des dimensions légèrement supérieures à la pièce inférieure 2b, de manière à être posée sur celle-ci. En d'autres termes, on a supposé que la distance séparant les faces externes des parois opposées 20a de la pièce 2a était légèrement supérieure à la distance séparant les faces internes des parois 20b de la pièce 2b, de manière à ce que l'insertion puisse s'effectuer sans frottements importants, les parois en vis-à-vis étant cependant jointives.

La solution inverse est tout à fait possible, sans sortir du cadre de l'invention.

En outre, selon un mode de réalisation supplémentaire illustré par la figure 5, les deux pièces, référencées 2a' et 2b' peuvent être strictement identiques en forme et en dimension. Le socle 2' est constitué par l'assemblage, toujours tête-bêche de ces pièces 2a' et 2b', mais décalées de l'épaisseur d'une paroi latérale suivant un axe horizontal, indifféremment vers la droite ou la gauche. A l'exception de cette disposition particulière, l'assemblage et le réglage en hauteur s'effectuent comme dans le cas précédent, à l'aide de systèmes vis-écrou 3. ll est donc inutile de redécrire le processus.

Dans une variante de réalisation (non représentée), les rampes de perçage, au lieu d'être réalisées symétriquement par rapport à un axe vertical passant par le milieu des parois 20a ou 20b (pentes +α et -α : figure 3c), pourraient être réalisées de manière identique : même pente.

Dans la variante précédemment décrite, les projections sur un plan parallèle aux parois 21a et 21b ont la forme de "Vé" renversés à 90 degrés, dont les pointes sont en vis-à-vis. Dans la dernière variante évoquée, les pointes des 'Vé" sont dans le même sens, tournés vers la droite ou vers la gauche.

Pour fixer les idées, dans l'application préférée envisagée, les dimensions typiques du socle 2 et de ses éléments constitutifs, les pièces 2a et 2b, réalisées en tôle, sont typiquement les suivantes :
- dimensions des parois horizontales 20a et 20b : environ 600 × 600 mm, si les pièces sont identiques (figure 5), sinon l'une des pièces a une largeur inférieure (entre parois opposées 21a ou 21b) pour autoriser l'emboîtement (deux fois l'épaisseur des parois) ;
- hauteur des parois verticales 21a et 21b : 120 mm et épaisseur 5 mm environ ;
- nombre de trous de chaque rangée des rampes de perçage typiquement égal à 5, soit 10 trous par rampe de perçage, avec un entre-axe vertical *dh* = 5 mm (pas vertical), un entre-axe horizontal de 25 mm (pas horizontal) et un diamètre typique de 17 mm ;
- écartement vertical entre deux rampes de perçage Δ*h* = 25 mm ;
- parois verticales 22a (lorsqu'elles existent) de même hauteur, typiquement de 50 mm.

Dans ces conditions, on obtient typiquement un réglage en hauteur du socle 2 compris entre les valeurs minimale *h*_{*min*} = 120 mm et maximale *h*_{*max*} = 170 mm, avec un pas d'incrémentation de 10 mm.

Dans toutes les variantes décrites, la hauteur maximale de socle est limitée par les positions extrêmes des trous sur les rampes de perçage, c'est-à-dire à une hauteur dépendant de l'épaisseur cumulée des pièces 2a et 2b. Si on désire une hauteur de socle 2 plus importante, on peut naturellement prévoir des pièces, 2a et 2b, de plusieurs épaisseurs. Selon un autre mode de réalisation du socle selon l'invention, illustré par les figures 6a et 6b (en coupe et en vue de face), on utilise des pièces 2a et 2b de hauteur standard, et on intercale entre ces deux pièces, en tant que de besoin, des entretoises 6.

En version de base 2, le socle est strictement identique à celui décrit dans les modes de réalisation précédents. On assemble purement et simplement les deux pièces 2a et 2b. La hauteur minimale est *h*_{*min*} et la hauteur maximale *h*_{*max*}. L'entretoise 6 n'est pas utilisée.

Par contre, si l'on désire une hauteur de socle 2 plus importante, on intercale deux entretoises 6 entre les pièces 2a et 2b (une sur chacune des paires d'ailes opposées, 21a et 21b). En coupe verticale, comme représenté sur la figure 6a, chaque entretoise 6 a la forme générale d'un "s" étiré en hauteur. Elle comprend deux branches verticales parallèles, une branche supérieure 60 et une branche inférieure 62, et une zone centrale de transition inclinée 61. L'écart entre les faces 60 et 61 est sensiblement égal à l'épaisseur des parois 20a et 20b, que l'on suppose *a priori* de même épaisseur. De ce fait, si l'on dispose les entretoises à l'intérieur du socle, comme illustré sur la figure 6a, l'entretoise 6 est accolée sur les faces internes des parois 21a et 21b. Comme le suggère la figure 6a (traits pointillés) l'entretoise 6 peut tout aussi bien être disposée à l'extérieur du socle 2.

Pour pouvoir assembler les deux pièces 2a et 2b et régler la hauteur du socle 2, on réalise sur les zones 60 et 62 des rampes de perçage inclinées, par exemple 7g et 8g respectivement (partie gauche seule visible sur la figure 6b), de façon similaire à ce qui a été réalisé pour les parois 21a et 21b et duales des rampes de perçage de ces parois. De façon plus précise, la zone 60 jouant le rôle de la paroi 21b pour la paroi en vis-à-vis 21a, la rampe de perçage 7g est inclinée vers le haut d'un angle α, si la rampe de perçage correspondante 4g est inclinée vers le bas (figure 3c). De même, la rampe de perçage 8g est inclinée vers le haut d'un angle α, si la rampe de perçage correspondante 5g est inclinée vers le bas (figure 3c), cette zone 62 jouant le rôle de la paroi 21a pour la paroi en vis-à-vis 21b.

Dans ces conditions, comme illustré par la figure 6a, la hauteur totale du socle 2 dépend de l'épaisseur des pièces 2a et 2b, de la hauteur des entretoises 6, et du choix des trous dans les rampes de perçage 7 et 4, d'une part, et 8 et 5, d'autre part. La hauteur maximale est donnée par la formule *h*_{*maxi*} = *h*_{*max*} + Δ *h*_{*maxi*}, avec *h*_{*max*} la hauteur maximale pouvant être obtenue par le seul assemblage des pièces 2a et 2b (figure 4b) et *Δh*_{*maxi*} le surplus maximum de hauteur permis par l'entretoise 6.

On va maintenant décrire un deuxième mode de réalisation d'un socle réglable en hauteur conforme l'invention par référence aux figures 7a et 7b, en vue de côté et de dessus, respectivement. En outre, pour mieux illustrer certaines particularités de ce mode de réalisation, un écorché partiel a été réalisé sur la figure 7a.

Selon ce mode de réalisation, le socle, ici référencé 2" est réalisé à base de deux tronçons de cylindre, 2a" et 2b", emboîtés l'un dans l'autre par coulissement. Il n'est pas nécessaire que ces pièces comportent un plateau horizontal (voir figure 3a par exemple: 20a et 20b). En d'autres termes, les cylindres restent ouverts. De façon préférentielle, comme illustré par la figure 7a, le coffre 12 est simplement posé sur le dessus du socle 2", c'est-à-dire sur directement sur l'arête supérieure de la paroi 20a" du tronçon de cylindre supérieur 2a". La fixation au sol *S* (non représentée) peut s'effectuer comme précédemment, c'est-à-dire à l'aide de chevilles à expansion ou de tout autre organe classique. Dans ce cas, il n'y aura plus d'intermédiaire entre des trous percés dans le sol *S* et le bas du coffre 12, les chevilles ayant un axe parallèle à celui d'une enceinte intérieure formée par les deux tronçons de cylindre emboîtés, 2a" et 2b".

L'assujettissement des deux pièces s'effectue, comme précédemment, à l'aide de rangées de trous et de système vis-écrous ou, comme il a été indiqué, par de simples organes de butée ou d'accrochage (goupilles, rivets, etc.) empêchant un déplacement mutuel des deux pièces emboîtées, 2a" et 2b".

Bien qu'il doive être bien clair que le terme "cylindre" ne désigne pas seulement des pièces de section circulaire, on a supposé, dans ce premier exemple de réalisation, que les tronçons de cylindre, 2a" et 2b", avaient effectivement une section circulaire, comme illustré plus particulièrement par la figure 7b (sur cette figure, le coffre 12 est représenté schématiquement en pointillés).

De façon préférentielle, dans cette variante de réalisation particulière, les rampes de perçage de trous, 4" et 5", ont une configuration hélicoïdale. En d'autres termes, les trous 40" et 50" des hélices respectives, 4" et 5", sont répartis tout autour des parois des tronçons de cylindre 2a" et 2b".

Les hélices, 4" et 5", associées à ces tronçons de cylindre, 2a" et 2b", sont contrarotatives. Comme dans le cas du premier mode de réalisation, les pentes des rampes de trous, 4" et 5", forment des angles ± α par rapport à un plan horizontal, c'est-à-dire, de façon pratique, par rapport à la surface du sol *S*. Dans l'exemple illustré sur la figure 7a, les hélices comprennent une spire complète (180 degrés). Il est clair cependant qu'elles pourraient ne comporter qu'une fraction de spire ou, tout au contraire, plus d'une spire.

Le réglage en hauteur du socle 2" s'effectue en sélectionnant un trou, 40" et 50", de chacune des rampes de perçage, 4" et 5", et en y introduisant un organe d'accouplement 3, système vis-écrou ou autre. Il est à remarquer que, si le diamètre de la face extérieure de la paroi 20a" du tronçon de cylindre 2b" et le diamètre de la face intérieure de la paroi 20b" du tronçon de cylindre 2b" sont déterminés de façon appropriée, un seul organe 3 est nécessaire. Il suffit, en effet, que les tronçons de cylindre, 2a" et 2b", coulissent avec un jeu très faible pour que l'assise horizontale du socle 2" soit assurée.

Comme il a été indiqué, les tronçons de cylindre peuvent être dotés de sections qui diffèrent de la section circulaire. Ils peuvent être notamment dotés d'une section polygonale.

La figure 8 illustre, en vue de dessus, un socle réglable en hauteur, ici référencé 2p, de section pentagonale dans un plan horizontal. Comme précédemment, le coffre 12 est posé directement sur l'arête supérieure des parois des tronçons de cylindre, 2pa et 2pb. On a illustré, de façon arbitraire, en traits pointillés, l'emplacement du coffre 12.

Dans cette variante de réalisation, on prévoit également deux rampes de trous (non représentées), formant des angles ± α par rapport à un plan horizontal, de façon similaire à la figure 7a. Mais, de façon préférentielle, les trous sont répartis sur les différentes faces du pentagone, ce à raison d'un seul trou par face. Il doit cependant être bien compris qu'il est possible de prévoir plusieurs trous par face, voire plusieurs rangées de trous par rampe de perçage (comme dans le cas du premier mode de réalisation).

Comme précédemment également, si les deux tronçons de cylindre, 2pa et 2pb, coulissent sans jeu excessif, il suffit de sélectionner un seul trou sur deux parois en vis-à-vis et d'y introduire un organe 3, de butée ou d'assemblage, par exemple un système vis-écrou.

Les figures 9a et 9b illustrent un socle réglable en hauteur, ici référencé 2h, réalisé à partir de deux tronçons de cylindre de section hexagonale, en vue de dessus et en vue de côté, respectivement. Comme précédemment, le coffre 12 est posé directement sur l'arête supérieure des parois des tronçons de cylindre, 2ha et 2hb. On a illustré, de façon arbitraire, en traits pointillés, l'emplacement du coffre 12.

Dans cette variante de réalisation, on prévoit préférentiellement des rampes de trous sur chaque paire de faces opposées de la paroi de l'hexagone, c'est-à-dire les paires 20ha, 21ha et 22ha, pour le tronçon de cylindre 2ha, et les paires 20hb, 21hb et 22hb, pour le tronçon de cylindre 2hb. De façon préférentielle également, les rampes de trous associées à chaque paire de faces ont des entre-axes différents. Pour simplifier le dessin, sur la figure 9b, on a représenté trois trous par rampe de perçage, une seule rangée de trous par rampe de perçage et une seule rampe de perçage par face, étant bien entendu que cette configuration n'est nullement limitative des possibilités offertes par cette variante de réalisation.

De façon plus précise, on a représenté, sur la figure 9b, la rampe 4h1 de trous 40h1, associée à l'une des paires de faces 20ha, la rampe 4h2 de trous 40h2, associée à l'une des paires de faces 21ha, et la rampe 4h3 de trous 40h3, associée à l'une des paires de faces 22ha. Les indices 1, 2 et 3 sont arbitraires et sont associées aux entre-axes distincts des trois rampes de perçage 4h1, 4h2 et 4h3. Naturellement, les paires de faces, 20hb, 21hb et 22hb, de la paroi hexagonale du tronçon de cylindre 2hb sont également pourvues de rampes de perçage identiques, à l'exception toutefois du fait que les pentes de ces rampes de perçage sont inversées par rapport à un plan horizontal. A titre d'exemple, on a suggéré en pointillés la rampe de perçage 5h1 associée à la paire de faces 20hb. La pente de cette rampe de perçage est - α1 par rapport au sol *S* (dans l'exemple pratique de la figure 9b), alors que la pente de la rampe de perçage 4h1 est + α1.

Dans cette variante de réalisation, on sélectionne avantageusement un trou sur chacune des rampes de perçage associées à une paire de faces opposées, par exemple (comme illustré sur la figure 9a) la paire 20ha, pour le tronçon de cylindre 2ha, et la paire 20hb, pour le tronçon de cylindre 2hb. On y introduit ensuite des organes 3, par exemple des systèmes vis-écrous, pour empêcher un déplacement mutuel des tronçons de cylindre 2ha et 2hb.

Bien que l'on ait supposé jusqu'à présent que le tronçon de cylindre inférieur (par exemple le tronçon de cylindre 2b" pour la variante de réalisation des figures 7a et 7b) soit disposé à l'intérieur du tronçon supérieur, la solution inverse est naturellement tout à fait possible.

De même, pour toutes les variantes de réalisations décrites au regard des figures 7a à 9b, il est également possible de prévoir une pièce intermédiaire (non représenté) jouant un rôle similaire à l'entretoise des figures 6a et 6b. Naturellement, la configuration de cette pièce intermédiaire doit être adaptée à la configuration des tronçons de cylindre formant les pièces de base du socle réglable selon l'invention. A titre d'exemple, si on se reporte de nouveau à la variante des figures 7a et 7b, la pièce intermédiaire sera également constituée à partir d'un tronçon de cylindre présentant des sections circulaires. On doit également prévoir, sur la pièce intermédiaire, au moins deux trous pour les apparier avec un trou de l'hélice 4" et un trou de l'hélice 5". De façon plus générale, les trous effectués dans la pièce intermédiaire peuvent présenter des configurations diverses : matrice régulière de trous répartis selon deux axes de coordonnées orthogonaux, double hélice (une apparié à l'hélice 4" et l'autre appariée à l'hélice 5"), etc.

A la lecture de ce qui précède, on constate aisément que l'invention atteint bien les buts qu'elle s'est fixés.

Elle propose notamment un socle simple à réaliser, réglable en hauteur de façon aisée, et de surplus bon marché. Aucune soudure n'est nécessaire.

Il doit être clair cependant que l'invention n'est pas limitée aux seuls exemples de réalisations explicitement décrits, notamment en relation avec les figures 3a à 6b.

En particulier, les dimensions du socle et de ses composants dépendent de l'application spécifique envisagée et les exemples numériques n'ont été donnés que dans le seul but de mieux préciser l'invention, sans en limiter la portée. Par ailleurs, les matériaux utilisables participent d'un simple choix technologique à la portée de l'Homme du Métier.

De même, bien qu'avantageuse, car elle permet un réglage plus fin, la solution consistant à prévoir deux rangées parallèles de trous pour chaque rampe de perçage, (dans le cas de pièces en forme de "U" pour premier mode de réalisation ou dans le cas de pièces de section hexagonale, pour le second mode de réalisation), ne constitue pas une condition indispensable. On peut prévoir seulement une seule rangée ou, au contraire, notamment pour des socles de grande hauteur, plus de deux rangées de trous, sans sortir non plus du cadre de l'invention. Le nombre de trous par rangée, par paroi ou par spire d'hélice, selon le mode et la variante de réalisation dans ce mode, n'est aucunement limité à celui précisément représenté sur les figures.

Les hauteurs des deux pièces constituant le socle peuvent être différentes. Enfin, comme il a été indiqué, le socle réglable en hauteur, objet de la présente invention, est plus particulièrement destiné à des coffres légers. Ces coffres, ou, de façon plus générale, les installations supportées par les socles ne nécessitent pas nécessairement, en fonction de l'application précisément visée, d'être fixés au sol. De même, le socle réglable en hauteur peut ne pas être posé sur le sol, mais de façon également plus générale, sur toute surface d'appui.

## Revendications

1. Socle réglable en hauteur (2) pour une installation (12), notamment pour un automate bancaire (1) comprenant un coffre à billets, ledit socle (2) étant interposé entre cette installation et une surface d'appui (*S*), caractérisé en ce qu'il comprend au moins des première (2a) et seconde (2b) pièces de hauteurs déterminées, chacune comprenant au moins une paroi latérale (21a, 21b) à coopération mutuelle, en ce que chacune desdites parois latérales (21a, 21b) est pourvue d'au moins une rampe de perçage inclinée (4g-4d, 5g-5d) comportant au moins une rangée de plusieurs trous (40g, 41g, 40d, 41d, 50g, 51g, 50d, 51d), en ce que lesdites pièces coopèrent par emboîtement l'une dans l'autre de façon qu'au moins une paire de trous appartenant, respectivement, à ces première et seconde pièces (2a, 2b) soient en correspondance, et en ce qu'un moyen de butée (3) empêchant un déplacement mutuel de ces pièces s'étend dans ladite paire de trous, de manière à obtenir un réglage entre une hauteur maximale (*h*_{*max*}) et une hauteur minimale (*h*_{*min*}), fonction desdites paires de trous sélectionnées et de ladite hauteur déterminée des première et seconde pièces (2a, 2b).

2. Socle réglable en hauteur (2) selon la revendication 1, caractérisé en ce que lesdites rampes de perçage inclinées (4g-4d, 5g-5d) comprennent chacune deux rangées de trous parallèles (40g, 41g, 40d, 41d, 50g, 51g, 50d, 51d).

3. Socle réglable en hauteur (2) selon la revendication 1, caractérisé en ce qu'il comprend au moins une pièce supplémentaire (6) constituant une entretoise, en ce que chaque pièce supplémentaire (6) est munie de trous sur des extrémités opposées (60, 62), lesdits trous étant appariés aux trous dont sont pourvues lesdites première (2a) et seconde (2b) pièces, de manière à autoriser un assemblage entre la première pièce (2a) et chaque pièce supplémentaire (6), d'une part, et chaque pièce supplémentaire (6) et la seconde pièce (2b), d'autre part, et permettre une amplitude maximale (*h*_{*maxi*}) dudit réglage plus importante.

4. Socle réglable en hauteur (2) selon la revendication 3, caractérisé en ce que chaque pièce supplémentaire (6) a, vu de profil, une forme de « S » étiré présentant deux branches (60,62) parallèles et distantes l'une de l'autre de façon qu'elles puissent être accolées aux dites parois latérales (21a, 21b) des première (2a) et seconde (2b) pièces.

5. Socle réglable en hauteur (2) selon la revendication 1, caractérisé en ce que lesdites première (2a) et seconde (2b) pièces de hauteurs déterminées comprennent chacune une paroi principale plane (20a, 20b) et au moins une paire de parois latérales (21a, 21b), sur des arêtes opposées de ladite paroi principale plane (20a, 20b), de manière à ce que lesdites pièces (2a, 2b) aient la forme générale d'un "U", en ce que chacune desdites parois latérales (21a, 21b) comporte deux paires de rampes de perçage inclinées (4g-4d, 5g-5d), constituées chacune d'au moins une rangée de trous (40g, 41g, 40d, 41d, 50g, 51g, 50d, 51d) et en ce que lesdites première (2a) et seconde (2b) pièces coopèrent par emboîtement l'une sur l'autre tête-bêche, leurs parois latérales (21a, 21b) étant en vis-à-vis, une paire particulière desdits trous (40g, 41g, 40d, 41d, 50g, 51g, 50d, 51d) de chaque paroi étant en correspondance de trous de l'autre pièce, et des moyens de butée (3) s'étendant dans lesdits trous en correspondance pour empêcher un déplacement mutuel entre lesdites deux pièces (2a, 2b) en forme de "U", de manière à obtenir un réglage entre une hauteur maximale (*h*_{*max*}) et une hauteur minimale (*h*_{*min*}), fonction desdites paires de trous sélectionnées et de ladite hauteur déterminée des première et seconde pièces.

6. Socle réglable en hauteur (2) selon la revendication 5, caractérisé en ce que ladite installation (12) repose sur ladite face principale (20a) de la première (2a) des dites pièces et en ce qu'au moins cette première pièce (2a) comporte une seconde paire de parois (22a), de manière à la rigidifier.

7. Socle réglable en hauteur (2") selon la revendication 1, caractérisé en ce que lesdites deux pièces sont des tronçons de cylindre (2a", 2b") dont les parois (20a", 20b") présentent une section circulaire, en ce que lesdites rampes de perçage inclinées comportant des trous (4", 5") ont chacune la configuration d'au moins une portion de spire d'hélice se déroulant sur les parois (20a", 20b") desdits tronçons de cylindre (2a", 2b"), et en ce que lesdites rampes de perçage inclinées (4", 5") ont des pentes (+α, -α) inverses l'une de l'autre par rapport à ladite surface d'appui (*S*) ; la sélection d'une paire de trous (40", 50") déterminée de chacune desdites rampes de perçage inclinées (4", 5") et leur mise en correspondance permettant ledit réglage en hauteur.

8. Socle réglable en hauteur (2) selon la revendication 1, caractérisé en ce que lesdites deux pièces sont des tronçons de cylindre (2pa, 2pb) dont les parois présentent une section pentagonale, et en ce que chaque face desdites parois de section pentagonale de chacune desdits tronçons de cylindre comporte au moins un trou ; la sélection d'une paire de trous déterminée sur l'une desdites faces de chacune desdits tronçons de cylindre et leur mise en correspondance permettant ledit réglage en hauteur.

9. Socle réglable en hauteur (2) selon la revendication 1, caractérisé en ce que lesdites deux pièces sont des tronçons de cylindre (2ha, 2hb) possédant des parois comportant des paires de faces opposées (20ha-20hb, 21ha-21hb, 22ha-22hb) et présentant une section hexagonale, en ce que chacune desdites faces est munie d'au moins une rampe de perçage (4h1-5h1, 4h2, 4h3) comportant des trous (40h1, 40h2, 40h3), en ce que les trous (40h1, 40h2, 40h3) de ces rampes de perçage (4h1-5h1, 4h2, 4h3) ont des entre-axes distincts d'une paire de faces à l'autre, et en ce que lesdites rampes de perçage ont des pentes (+α1, -α1) inverses l'une de l'autre par rapport à ladite surface d'appui (*S*) ; deux trous déterminés sur l'une desdites paires de faces (20ha-20hb) de chacun desdits tronçons de cylindre (2ha, 2hb) étant en correspondance mutuelle.
